# EUROPEAN PATENT APPLICATION

(11) **EP 4 694 086 A1**
(43) Date of publication of application: **11.02.2026**
(21) Application number: 24795730.1
(22) Date of filing: 25.03.2024
(51) Int. Cl.: H04L 67/1095

(54) **TRAFFIC REPLICATION METHOD AND APPARATUS BASED ON LOAD BALANCING, AND TRAFFIC REPLICATION NODE**

(30) Priority: 28.04.2023 CN 202310486882; 31.07.2023 CN 202310952530
(71) Applicant: Huawei Cloud Computing Technologies Co., Ltd., Guiyang, Guizhou 550025 (CN)
(72) Inventor: ZHANG, Huichao, Guiyang, Guizhou 550025 (CN); YUE, Yu, Guiyang, Guizhou 550025 (CN); GAO, Feng, Guiyang, Guizhou 550025 (CN)
(74) Representative: Thun, Clemens
(86) International application number: PCT/CN2024/083627
(87) International publication number: WO 2024/222347

(57) **Abstract**

This application discloses a load balancing-based traffic replication method and apparatus, and a traffic replication node, and relates to the field of cloud computing technologies. In this application, a traffic replication node is disposed in an infrastructure. The traffic replication node receives a traffic replication rule configured by a user, where the traffic replication rule includes an IP address of a first computing node and an IP address of a second computing node. The traffic replication node receives a first service packet sent by a load balancer node, sends the first service packet to the first computing node based on a destination IP address of the first service packet, generates a second service packet based on the first service packet and the traffic replication rule, and sends the second service packet to the second computing node based on a destination IP address of the second service packet. According to this application, in a load balancing environment, the traffic replication node provides a dedicated computing resource for traffic replication, thereby implementing efficient traffic replication.

## Description

### CROSS-REFERENCE TO RELATED APPLICATIONS

This application claims priority to Chinese Patent Application No. 202310486882.6, filed with the China National Intellectual Property Administration on April 28, 2023 and entitled "PROGRAMMABLE DEVICE-BASED TRAFFIC DISTRIBUTION METHOD AND APPARATUS", which is incorporated herein by reference in its entirety; and this application claims priority to Chinese Patent Application No. 202310952530.5, filed with the China National Intellectual Property Administration on July 31, 2023 and entitled "LOAD BALANCING-BASED TRAFFIC REPLICATION METHOD AND APPARATUS, AND TRAFFIC REPLICATION NODE", which is incorporated herein by reference in its entirety.

### TECHNICAL FIELD

This application relates to the field of cloud computing technologies, and in particular, to a load balancing-based traffic replication method and apparatus, and a traffic replication node.

### BACKGROUND

Traffic mirroring technologies can be used to replicate service traffic in a production environment to a production-like environment, and verify a pre-release version of an application in the production-like environment with the service traffic in the production environment, without awareness of an end user, to detect and resolve a problem in the pre-release version before the application is released. The production environment may be understood as a service server cluster running a cloud service application, and the production-like environment may be understood as a test server cluster running a pre-release version of an application.

In a currently used traffic mirroring technology, a traffic mirroring process is usually deployed on a load balancer or a node device to which an application in a production environment belongs, and the traffic mirroring process is responsible for replicating and distributing monitored service traffic to a production-like environment. However, the traffic mirroring process and the load balancer or the cloud service application are deployed on a same node device, which not only occupies a resource of the load balancer or the cloud service application, but also causes low efficiency of traffic replication.

### SUMMARY

Embodiments of this application provide a load balancing-based traffic replication method and apparatus, and a traffic replication node. In a load balancing environment, efficient traffic replication can be implemented through the traffic replication node.

According to a first aspect, an embodiment of this application provides a load balancing-based traffic replication method. The method may be applied to a traffic replication node disposed in an infrastructure. A first computing node, a second computing node, and a load balancer node may be further disposed in the infrastructure. The traffic replication method may include: The traffic replication node receives a traffic replication rule configured by a user, where the traffic replication rule includes an IP address of the first computing node and an IP address of the second computing node. The traffic replication node may receive a first service packet sent by the load balancer node, where a destination IP address of the first service packet is the IP address of the first computing node. The traffic replication node sends the first service packet to the first computing node, and generates a second service packet based on the first service packet and the traffic replication rule. A destination IP address of the second service packet is the IP address of the second computing node. The traffic replication node sends the second service packet to the second computing node.

In this embodiment of this application, the traffic replication node is added to the infrastructure, and the traffic replication node generates the second service packet based on the first service packet sent by the load balancer node and the traffic replication rule, to implement traffic replication without performing traffic replication on the first computing node or the load balancer node. In a load balancing environment, the traffic replication node provides a dedicated computing resource for traffic replication, thereby implementing efficient traffic replication.

In a possible implementation, the traffic replication rule may include a correspondence between the IP address of the first computing node and the IP address of the second computing node. After receiving the first service packet sent by the load balancer node, the traffic replication node may replicate the first service packet to obtain a mirrored packet of the first service packet, and change the IP address of the first computing node in the mirrored packet to the IP address of the second computing node based on the correspondence between the IP address of the first computing node and the IP address of the second computing node, to obtain the second service packet.

In the foregoing implementation, when there are a plurality of computing nodes, the traffic replication node may replicate the first service packet based on a correspondence between IP addresses of computing nodes in the traffic replication rule, to accurately determine the destination IP address of the second service packet, so as to obtain the second service packet.

In a possible implementation, destination port information of the first service packet is port information of a first application. The traffic replication node may send the first service packet to the first application on the first computing node based on the IP address of the first computing node and the port information of the first application.

In the foregoing implementation, when a plurality of applications run on the first computing node, the traffic replication node may accurately send the first service packet to a corresponding application on the first computing node based on the destination port information of the first service packet.

In a possible implementation, the traffic replication rule may further include a correspondence between the port information of the first application and port information of a second application, where the second application is an application on the second computing node. The traffic replication node may determine, based on the correspondence between the port information of the first application and the port information of the second application, that destination port information of the second service packet is the port information of the second application, and send the second service packet to the second application on the second computing node based on the IP address of the second computing node and the port information of the second application.

In the foregoing implementation, when a plurality of applications run on the second computing node, the traffic replication node may accurately determine the destination port information of the second service packet based on a correspondence between port information of applications in the traffic replication rule, to send the second service packet to a corresponding application on the second computing node.

In a possible implementation, after sending the second service packet to the second computing node, if receiving a first reply packet that is for the first service packet and that is sent by the first computing node, the traffic replication node sends the first reply packet to the load balancer node, or if receiving a second reply packet that is for the second service packet and that is sent by the second computing node, the traffic replication node discards the second reply packet.

In a possible implementation, when receiving a reply packet, the traffic replication node may determine, based on an IP address carried in the reply packet and the traffic replication rule, that the reply packet is the first reply packet sent by the first computing node, or that the reply packet is the second reply packet sent by the second computing node.

In the foregoing process, according to the traffic replication rule, the traffic replication node can accurately distinguish between the reply packet returned by the first computing node and the reply packet returned by the second computing node. For the reply packet returned by the second computing node, the traffic replication node may discard the reply packet, and for the reply packet returned by the first computing node, the traffic replication node may send the reply packet to the load balancer node, to ensure a normal service communication procedure.

According to a second aspect, an embodiment of this application further provides a load balancing-based traffic replication method. The traffic replication method may be applied to a management platform, and the management platform is configured to manage an infrastructure. The infrastructure may include a load balancer node, a traffic replication node, a first computing node, and a second computing node. The traffic replication method may include: The management platform obtains a packet distribution rule configured by a user, where the packet distribution rule includes an IP address of the first computing node; sends the packet distribution rule to the load balancer node, where the packet distribution rule indicates the load balancer node to send a service packet to the first computing node, and the service packet is sent to the first computing node through the traffic replication node; obtains a traffic replication rule configured by the user, where the traffic replication rule includes an IP address of the first computing node and an IP address of the second computing node; and sends the traffic replication rule to the traffic replication node, where the traffic replication rule indicates the traffic replication node to replicate the service packet and send a service packet obtained through replication to the second computing node.

According to a third aspect, an embodiment of this application provides a load balancing-based traffic replication apparatus. The apparatus is used in a traffic replication node, the traffic replication node is disposed in an infrastructure, and a first computing node, a second computing node, and a load balancer node are further disposed in the infrastructure. The apparatus includes:
a rule receiving unit, configured to receive a traffic replication rule configured by a user, where the traffic replication rule includes an IP address of the first computing node and an IP address of the second computing node;
a packet receiving unit, configured to receive a first service packet sent by the load balancer node, where a destination IP address of the first service packet is the IP address of the first computing node;
a traffic distribution unit, configured to send the first service packet to the first computing node; and
a traffic mirroring unit, configured to: generate a second service packet based on the first service packet and the traffic replication rule, and send the second service packet to the second computing node, where a destination IP address of the second service packet is the IP address of the second computing node.

In a possible implementation, the traffic replication rule includes a correspondence between the IP address of the first computing node and the IP address of the second computing node. The traffic mirroring unit is specifically configured to:
replicate the first service packet to obtain a mirrored packet of the first service packet; and
change the IP address of the first computing node in the mirrored packet to the IP address of the second computing node based on the correspondence between the IP address of the first computing node and the IP address of the second computing node, to obtain the second service packet.

In a possible implementation, destination port information of the first service packet is port information of a first application. The traffic distribution unit is specifically configured to:
send the first service packet to the first application on the first computing node based on the IP address of the first computing node and the port information of the first application.

In a possible implementation, the traffic replication rule further includes a correspondence between the port information of the first application and port information of a second application, and the second application is an application on the second computing node. The traffic mirroring unit is specifically configured to:
determine, based on a correspondence between the port information of the first application and the port information of the second application, that destination port information of the second service packet is the port information of the second application; and
send the second service packet to the second application on the second computing node based on the IP address of the second computing node and the port information of the second application.

In a possible implementation, the apparatus may further include a reply packet processing unit, and the reply packet processing unit is configured to:
if receiving a first reply packet that is for the first service packet and that is sent by the first computing node, send the first reply packet to the load balancer node; or
if receiving a second reply packet that is for the second service packet and that is sent by the second computing node, discard the second reply packet.

In a possible implementation, the reply packet processing unit is further configured to:
when receiving a reply packet, determine, based on an IP address carried in the reply packet and the traffic replication rule, that the reply packet is the first reply packet sent by the first computing node, or that the reply packet is the second reply packet sent by the second computing node.

According to a fourth aspect, an embodiment of this application provides a traffic replication node, including a memory and a processor. A computer program is stored in the memory. The processor is configured to read and execute the computer program stored in the memory, so that any method provided in the first aspect is performed.

According to a fifth aspect, an embodiment of this application provides a cloud service system. The cloud service system may include a traffic replication node, a first computing node, a second computing node, and a load balancer node. The traffic replication node may be the traffic replication node provided in the fourth aspect. For example, the load balancer node is configured to receive a packet distribution rule configured by a user, where the packet distribution rule includes an IP address of the first computing node. The traffic replication node is configured to receive a traffic replication rule configured by the user, where the traffic replication rule includes the IP address of the first computing node and an IP address of the second computing node. The load balancer node is further configured to: determine, according to the packet distribution rule, that a destination IP address of the first service packet is the IP address of the first computing node, and send the first service packet to the traffic replication node. The traffic replication node is further configured to: receive the first service packet, send the first service packet to the first computing node, generate a second service packet based on the first service packet and the traffic replication rule, and send the second service packet to the second computing node, where a destination IP address of the second service packet is the IP address of the second computing node.

According to a sixth aspect, an embodiment of this application provides a computer-readable storage medium. The computer-readable storage medium stores computer-executable instructions, and the computer-executable instructions are used to enable a computer to perform any method provided in the first aspect or the second aspect.

According to a seventh aspect, an embodiment of this application provides a computer program product, including computer-executable instructions. The computer-executable instructions are used to enable a computer to perform any method provided in the first aspect or the second aspect.

For technical effects that can be achieved in any one of the second aspect to the seventh aspect, refer to descriptions of beneficial effects in the first aspect. Details are not described herein again.

### BRIEF DESCRIPTION OF DRAWINGS

FIG. 1 is a diagram of a structure of a cloud service system according to an embodiment of this application;
FIG. 2 is an interaction diagram of a load balancing-based traffic replication method according to an embodiment of this application;
FIG. 3 is a diagram of traffic transmission between nodes according to an embodiment of this application;
FIG. 4 is a diagram of a structure of another cloud service system according to an embodiment of this application;
FIG. 5 is a diagram of a rule distribution process according to an embodiment of this application;
FIG. 6 is a diagram of a traffic distribution and traffic replication process according to an embodiment of this application;
FIG. 7 is a flowchart of a load balancing-based traffic replication method according to an embodiment of this application;
FIG. 8 is a diagram of another load balancing-based traffic replication apparatus according to an embodiment of this application;
FIG. 9 is a diagram of a load balancing-based traffic replication apparatus according to an embodiment of this application;
FIG. 10 is a diagram of another load balancing-based traffic replication apparatus according to an embodiment of this application;
FIG. 11 is a diagram of another load balancing-based traffic replication apparatus according to an embodiment of this application; and
FIG. 12 is a diagram of a structure of a traffic replication node according to an embodiment of this application.

### DESCRIPTION OF EMBODIMENTS

To make the objectives, technical solutions, and advantages of embodiments of this application clearer, the following describes embodiments of this application in detail with reference to the accompanying drawings. Terms used in implementations of this application are merely used to explain specific embodiments of this application, but are not intended to limit this application. It is clear that the described embodiments are merely some rather than all of embodiments of this application. All other embodiments obtained by a person of ordinary skill in the art based on embodiments of this application without creative efforts shall fall within the protection scope of this application.

Before specific solutions provided in embodiments of this application are described, some terms in this application are explained and described, to facilitate understanding by a person skilled in the art, but not to limit the terms in this application.
(1) Production-like environment: A production environment may be understood as a service server cluster running a cloud service application, and the production-like environment may be understood as a test server cluster running a pre-release version of an application. For the application, the production-like environment is a transition from a test environment to the production environment. The application can be tested one last time in the production-like environment before being officially released. A configuration, database, and the like of the production-like environment are the same as those of the production environment. Testing the application in the production-like environment helps detect in advance a hidden problem caused by a code change or the like.
(2) Open communication system interconnection (open system interconnection, OSI) reference model: The OSI model is a standard framework that allows various computers to be interconnected into a network. The OSI model divides a computer network architecture into seven layers. Each layer implements respective functions and protocols and communicates with an interface of an adjacent layer. The seven layers are a physical layer, a data link layer, a network layer, a transport layer, a session layer, a presentation layer, and an application layer. A layer 4 is the transport layer. The transport layer is used to provide a communication transmission service between computers, and main protocols used by the transport layer include TCP and UDP. A layer 7 is the application layer. The application layer may provide a service for different network applications according to different application layer protocols. The application layer protocols are used to define a rule of interaction between applications.
(3) Application load balancer (application load balancer, ALB): The application load balancer is a network component. The ALB can be used to allocate and balance received service traffic among a plurality of servers or computing nodes in a cloud service system to improve availability, scalability, and system performance of the cloud service system. Each service packet received by the ALB belongs to service traffic. The ALB distributes the received service traffic to the plurality of computing nodes connected to a backend, to ensure that each computing node is properly loaded and prevent a single computing node from being overloaded.

In embodiments of this application, "a plurality of" means two or more. In view of this, in embodiments of this application, "a plurality of" may also be understood as "at least two". "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

Unless otherwise specified, ordinal numbers such as "first" and "second" in embodiments of this application are used to distinguish between a plurality of objects, and are not intended to limit a sequence, a time sequence, priorities, or importance of the plurality of objects.

In a currently used traffic mirroring technology, a traffic mirroring process is usually deployed on an ALB or a node device to which an application in a production environment belongs, and the traffic mirroring process is responsible for replicating and distributing monitored service traffic to a production-like environment. The traffic mirroring process and the ALB or the cloud service application are deployed on a same node device, which not only occupies a resource of the ALB or the cloud service application, but also causes low efficiency of traffic replication.

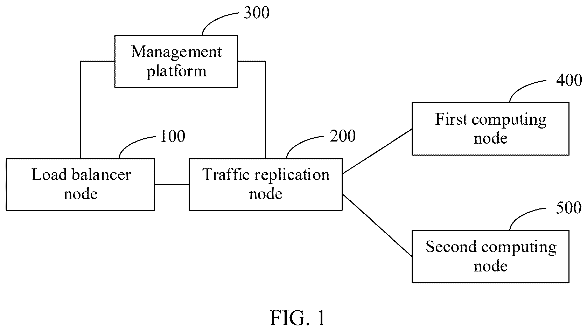

Based on this, an embodiment of this application provides a cloud service system. The cloud service system may be used in an infrastructure. For example, the infrastructure may be an infrastructure in an automated test scenario of an application. FIG. 1 shows an example of a diagram of a structure of a cloud service system. As shown in FIG. 1, the cloud service system may include a load balancer node 100, a traffic replication node 200, a first computing node 400, and a second computing node 500. The first computing node 400 may be configured to run a cloud service application, and the second computing node 400 may be configured to run a to-be-tested test application. The first computing node 400 and the second computing node 500 may be understood as carriers of applications. For example, the first computing node 400 and the second computing node 500 may be virtual devices, such as containers, virtual machines, or serverless functions, or may be physical servers. The traffic replication node 200 may receive a traffic replication rule configured by a user, replicate, according to the traffic replication rule, a service packet sent by the load balancer node 100, send an original service packet to the first computing node 400, and send a new service packet obtained through replication to the second computing node 500.

In some embodiments, the cloud service system may include a plurality of computing nodes configured to run the cloud service application and a plurality of computing nodes configured to run the test application. The first computing node 400 may be any one of the plurality of computing nodes configured to run the cloud service application, and the second computing node 500 may be any one of the plurality of computing nodes configured to run the test application.

In addition to the automatic test scenario of the application, the cloud service system shown in FIG. 1 may be used in another traffic replication scenario. This is not limited in embodiments of this application.

In some embodiments, the cloud service system may further include a management platform 300. The management platform 300 is configured to manage an infrastructure, and may send a packet distribution rule to the load balancer node 100 and send the traffic replication rule to the traffic replication node 200. The load balancer node 100 may be an ALB. For a received service packet, the ALB may determine a destination Internet Protocol (Internet Protocol, IP) address of the service packet according to the packet distribution rule sent by the management platform 300, where the packet distribution rule may also be referred to as a load balancing rule, add the destination IP address of the service packet to the service packet, and send the service packet to the traffic replication node 200. It is assumed that the destination IP address of the service packet is an IP address of the first computing node 400. The traffic replication node 200 is configured to: send the service packet to the first computing node 400 based on the destination IP address carried in the service packet, replicate the received service packet, and determine, according to the traffic replication rule, a destination IP address of a service packet obtained through replication. It is assumed that the destination IP address of the service packet obtained through replication is an IP address of the second computing node 500. In this case, the traffic replication node 200 may send the service packet obtained through replication to the second computing node 500.

For example, the load balancer node 100 may be configured to receive the packet distribution rule configured by the user, where the packet distribution rule includes the IP address of a first computing node. The traffic replication node 200 may be configured to receive the traffic replication rule configured by the user, where the traffic replication rule includes the IP address of the first computing node and the IP address of the second computing node. The load balancer node 100 may be further configured to: determine, according to the packet distribution rule, that a destination IP address of a first service packet is the IP address of the first computing node, and send the first service packet to the traffic replication node. The traffic replication node 200 may be further configured to: receive the first service packet, send the first service packet to the first computing node, generate a second service packet based on the first service packet and the traffic replication rule, and send the second service packet to the second computing node. A destination IP address of the second service packet is the IP address of the second computing node.

In an optional embodiment, the management platform 300 and the load balancer node 100 may be applications deployed on an infrastructure, and the traffic replication node 200 may be a hardware device in the infrastructure. The management platform 300 may indicate and send instructions to a physical layer of the infrastructure, that is, the hardware device in the infrastructure.

In another optional embodiment, the management platform 300, the load balancer node 100, and the traffic replication node 200 may all be hardware devices in an infrastructure.

In this embodiment of this application, the traffic replication node is added to the cloud service system, and the traffic replication node generates a new service packet based on a service packet sent by the load balancer node and the traffic replication rule, to implement traffic replication without performing traffic replication on the first computing node or the load balancer node. The traffic replication node provides a dedicated computing resource for traffic replication, thereby implementing efficient traffic replication.

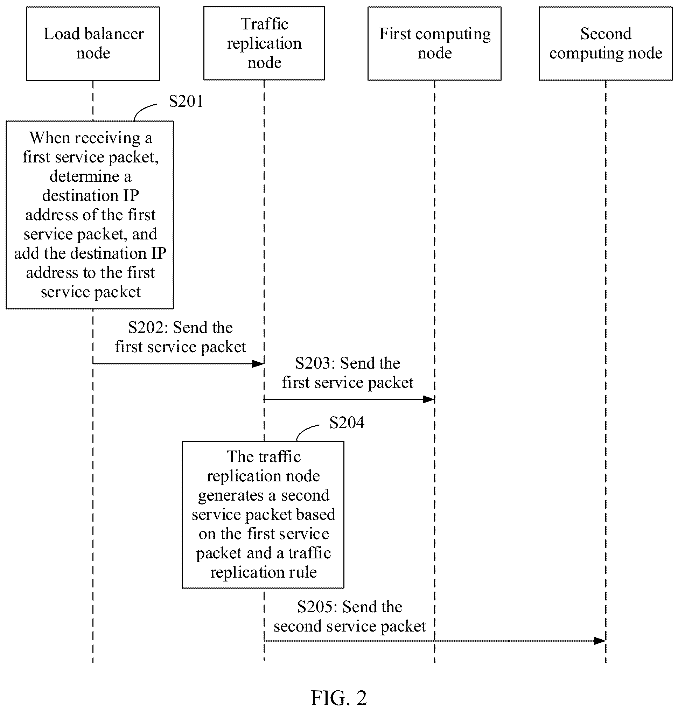

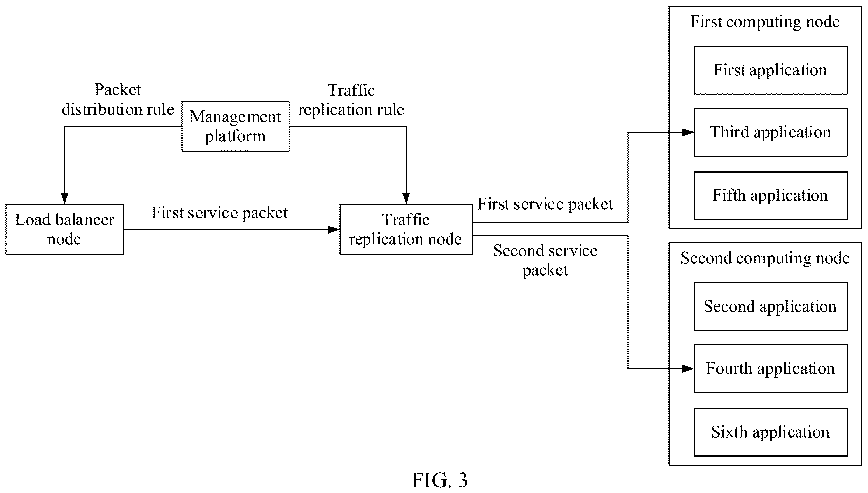

FIG. 2 and FIG. 3 shows a process of interaction between a load balancer node, a traffic replication node, a first computing node, and a second computing node during performance of a load balancing-based traffic replication method. The process may include the following steps.

S201: When receiving a first service packet, the load balancer node determines a destination IP address of the first service packet, and adds the destination IP address to the first service packet.

When requesting a cloud service system to provide a service, a client may send a service packet to the cloud service system. The client may be understood as an application installed on a terminal device of a user. The service packet belongs to service traffic. For example, the service packet may be a packet in a hypertext transfer protocol (hypertext transfer protocol, HTTP) format.

In some embodiments, the load balancer node in the cloud service system receives the first service packet sent by the client, and may determine the destination IP address of the first service packet. For example, a management platform may send a packet distribution rule to the load balancer node. The packet distribution rule may include a correspondence between IP addresses of a plurality of computing nodes configured to run a cloud service application and content of a first specified field in a service packet header. The packet distribution rule may be in a form of a table, or may be in another form. The load balancer node may determine the destination IP address of the first service packet based on the correspondence between the content of the first specified field in the service packet header and the IP addresses of the computing nodes, and the content of the first specified field in the first service packet. For example, it is assumed that the content of the first specified field is "01", which corresponds to IP addresses of a plurality of computing nodes, including an IP address of the first computing node. It is assumed that the content of the first specified field is "02", which corresponds to IP addresses of a plurality of computing nodes, including an IP address of a third computing node. It is assumed that the content of the first specified field is "03", which corresponds to IP addresses of a plurality of computing nodes, including an IP address of a fifth computing node. The first computing node, the third computing node, and the fifth computing node are all computing nodes configured to run a cloud service application. If the content of the first specified field in the first service packet header is "01", the load balancer node selects a computing node with a light load from the IP addresses of the plurality of computing nodes corresponding to "01". For example, the load balancer node selects the first computing node from the IP addresses, may determine that the destination IP address of the first service packet is the IP address of the first computing node, and adds the IP address of the first computing node to the first service packet.

In some other embodiments, a plurality of cloud service applications may run on one computing node. For example, a first application, a third application, and a fifth application may run on the first computing node, and the first application, the third application, and the fifth application are all cloud service applications. The packet distribution rule may further include a correspondence between port information of the plurality of applications and content of a second specified field in the service packet header. The load balancer node may determine destination port information of the first service packet based on the correspondence between the content of the second specified field in the service packet header and the port information of the applications, and content of a second specified field of the first service packet. For example, it is assumed that the content of the second specified field is "001", which corresponds to port information of the first application. It is assumed that the content of the second specified field is "002", which corresponds to port information of the third application. It is assumed that the content of the second specified field is "003", which corresponds to port information of the fifth application. If the content of the second specified field in the packet header of the first service packet is "001", the load balancer node may determine that the destination port information corresponding to the first service packet is the port information of the first application, and the load balancer node adds the port information of the first application to the first service packet.

A standard framework OSI model is used to transmit service traffic between devices. The OSI model uses a seven-layer structure. A layer 1 is a physical layer. Therefore, when data is transmitted between the devices, bitstreams at the physical layer are transmitted. When the client sends the first service packet to the cloud service system through the terminal device of the user, the terminal device encapsulates the first service packet at a layer 7 (an application layer) layer by layer, and encapsulates the first service packet into a bitstream at the physical layer, that is, physical layer data of the first service packet. The terminal device sends the physical layer data of the first service packet to the load balancer node. The load balancer node decapsulates the received physical layer data layer by layer to obtain the first service packet at the layer 7. The load balancer node determines the destination IP address and the destination port information of the first service packet based on the specified field in the packet header of the first service packet and the packet distribution rule, and adds the destination IP address and the destination port information of the first service packet to the first service packet. For example, the load balancer node may add the destination IP address and the destination port information of the first service packet to the first service packet in any one of manners such as an eBPF, a smartNIC, and a kernel module.

S202: The load balancer node sends the first service packet to the traffic replication node.

The first service packet obtained by the load balancer node is data at the layer 7. The load balancer node may encapsulate the first service packet at the layer 7 layer by layer to obtain the physical layer data of the first service packet, and send the physical layer data of the first service packet to the traffic replication node.

S203: The traffic replication node sends the first service packet to the first computing node.

In some embodiments, after receiving the first service packet sent by the load balancer node, the traffic replication node may obtain the destination IP address carried in the first service packet, and send the first service packet to a corresponding computing node based on the destination IP address carried in the first service packet. It is assumed that the destination IP address carried in the first service packet is the IP address of the first computing node. In this case, the traffic replication node sends the first service packet to the first computing node.

In some other embodiments, if the first service packet carries the destination IP address and the destination port information, the traffic replication node receives the first service packet sent by the load balancer node, and may obtain the destination IP address and the destination port information that are carried in the first service packet, and send the first service packet to a corresponding application on a corresponding computing node based on the destination IP address and the destination port information. For example, it is assumed that the destination IP address carried in the first service packet is the IP address of the first computing node, and the destination port information of the first service packet is the port information of the first application. In this case, the traffic replication node may send, based on the IP address of the first computing node and the port information of the first application, the first service packet to the first application running on the first computing node.

S204: The traffic replication node generates a second service packet based on the first service packet and a traffic replication rule.

The traffic replication node may receive the traffic replication rule configured by the user. The traffic replication rule may be sent by the management platform to the traffic replication node, and the traffic replication rule may be configured by the user. The management platform receives the traffic replication rule configured by the user, and sends the traffic replication rule to the traffic replication node. The traffic replication rule may be in a form of a table, or may be in another form.

In some embodiments, the traffic replication rule may include a correspondence between an IP address of each computing node configured to run a cloud service application and an IP address of each computing node configured to run a test application. For example, the IP address of the first computing node corresponds to an IP address of the second computing node. The second computing node is the computing node configured to run the test application. After receiving the first service packet sent by the load balancer node, the traffic replication node may replicate the first service packet to obtain a mirrored packet of the first service packet, and change the IP address of the first computing node in the mirrored packet to the IP address of the second computing node based on the correspondence between the IP address of the first computing node and the IP address of the second computing node, to obtain the second service packet.

In some other embodiments, if a plurality of applications run on one computing node, for example, a second application, a fourth application, and a sixth application run on the second computing node, the second application, the fourth application, and the sixth application are all test applications. The traffic replication rule may further include a correspondence between port information of the cloud service application and port information of the test application. For example, the port information of the first application corresponds to port information of the second application. The first application is the cloud service application, and the second application is the test application. After the traffic replication node replicates the first service packet to obtain the mirrored packet of the first service packet, in addition to changing the IP address of the first computing node in the mirrored packet to the IP address of the second computing node based on the correspondence between the IP address of the first computing node and the IP address of the second computing node, the traffic replication node may further change the port information of the first application in the mirrored packet to the port information of the second application based on the correspondence between the port information of the cloud service application and the port information of the test application, to obtain the second service packet.

In some embodiments, the traffic replication node receives the physical layer data of the first service packet sent by a load balancer, and decapsulates the physical layer data of the first service packet layer by layer, to obtain the first service packet at a layer 4, that is, transport layer data of the first service packet. The traffic replication node replicates the transport layer data of the first service packet, to obtain the mirrored packet of the first service packet.

The traffic replication node replicates service traffic at the layer 4 without decapsulating physical layer data of the service traffic layer by layer up to the layer 7, thereby reducing computing resources of the traffic replication node and improving efficiency of traffic mirroring.

In some embodiments, the traffic replication node 200 may be a programmable network processor device (programming network processor device), or a hardware-accelerated programmable network device. The programmable network processor device may also be referred to as a programmable NP device. The programmable network device may replicate to-be-distributed service traffic based on hardware, thereby further improving efficiency of traffic mirroring.

S205: The traffic replication node sends the second service packet to the second computing node.

In some embodiments, the traffic replication node may send the second service packet to a corresponding computing node based on a destination IP address of the second service packet. For example, if the destination IP address of the second service packet is the IP address of the second computing node, the traffic replication node sends the second service packet to the second computing node.

In some other embodiments, the traffic replication node may send the second service packet to a corresponding application on a corresponding computing node based on the destination IP address and destination port information of the second service packet. For example, the destination IP address of the second service packet is the IP address of the second computing node, and the destination port information of the second service packet is the port information of the second application. In this case, the traffic replication node may send, based on the IP address of the second computing node and the port information of the second application, the second service packet to the second application running on the second computing node.

In another embodiment, step S203 may be performed after step S204, or may be performed after step S205, or may be performed simultaneously with step S205.

In some embodiments, when receiving a service packet sent by the traffic replication node, the cloud service application running on the first computing node may send a reply packet of the service packet to the traffic replication node, where the reply packet carries the IP address of the first computing node. When receiving a mirrored service packet sent by the traffic replication node, the test application running on the second computing node may also send a reply packet of the mirrored service packet to the traffic replication node, where the reply packet carries the IP address of the second computing node.

When receiving a first reply packet that is for the first service packet and that is sent by the first computing node, the traffic replication node may send the first reply packet to the load balancer node. When receiving a second reply packet that is for the second service packet and that is sent by the second computing node, the traffic replication node discards the second reply packet.

For example, when receiving the reply packet for the service packet, the traffic replication node may determine, based on an IP address carried in the reply packet and the traffic replication rule, whether the reply packet is sent by the computing node running the cloud service application or the computing node configured to run the test application. For example, if the reply packet carries the IP address of the first computing node, it may be determined, according to the traffic replication rule, that the first computing node is the computing node configured to run the cloud service application, and the reply packet is the first reply packet that is for the first service packet and that is sent by the first computing node. In this case, the reply packet may be sent to the load balancer node, and the load balancer sends the reply packet to the client. If the reply packet carries the IP address of the second computing node, it may be determined, according to the traffic replication rule, that the second computing node is the computing node configured to run the test application, and the reply packet is the second reply packet that is for the second service packet and that is sent by the second computing node. In this case, the reply packet may be discarded.

To resolve a problem of low efficiency of traffic replication in a load balancing environment in a related technology, in this embodiment of this application, the traffic replication node is added to a basic setting, and the traffic replication node may be disposed between the load balancer node and the computing node configured to run the cloud service application. The traffic replication node receives the traffic replication rule configured by the user, and replicates, according to the traffic replication rule, the first service packet sent by the load balancer node, to generate the second service packet. In a load balancing environment, the traffic replication node provides a dedicated computing resource for traffic replication, thereby implementing efficient traffic replication.

In addition, the traffic replication node replicates the received service packet, to implement service traffic mirroring without deploying a traffic mirroring process on the computing node configured to run the cloud service application. This can prevent performance of cloud service applications from being affected due to maintenance of computing nodes of cloud service applications on respective traffic mirroring processes. Moreover, a traffic mirroring process does not need to be deployed on the load balancer node, which can reduce operation and maintenance complexity of the load balancer node, help maintain service stability of the load balancer node, and prevent the traffic mirroring process from occupying physical resources such as a connection resource, a memory resource, and a network adapter egress bandwidth of the load balancer node, thereby improving performance of the load balancer node. The traffic mirroring, cloud service application, and load balancer nodes run on different physical nodes, decoupling the traffic mirroring from the load balancer nodes and the cloud service application and improving overall performance of the cloud service system.

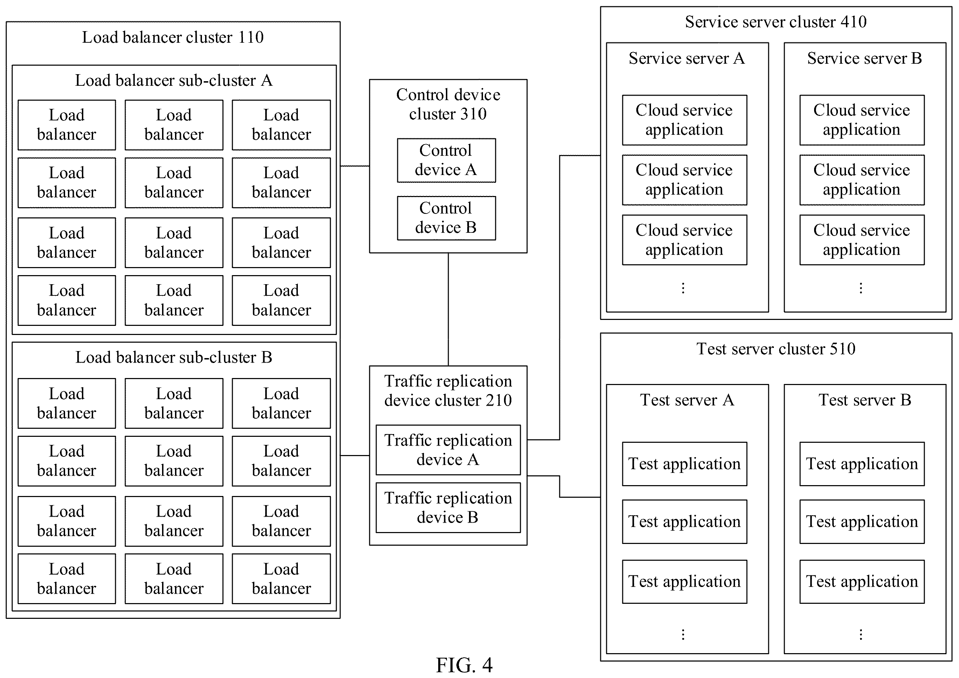

In some embodiments, the load balancer node in the cloud service system may be a load balancer, the traffic replication node may be a traffic replication device, the management platform may be a control device, the computing node configured to run the cloud service application may be a service server, the computing node configured to run the test application may be a test server, and there may be a plurality of load balancers, traffic replication devices, control devices, service servers, and test servers. For example, as shown in FIG. 4, a cloud service system may include a load balancer cluster 110, a traffic replication device cluster 210, a control device cluster 310, a service server cluster 410, and a test server cluster 510. The load balancer cluster 110 may include one or more load balancers. The traffic replication device cluster 210 may include one or more traffic replication devices. The control device cluster 310 may include one or more control devices. The service server cluster 410 may include one or more service servers. The test server cluster 510 may include one or more test servers.

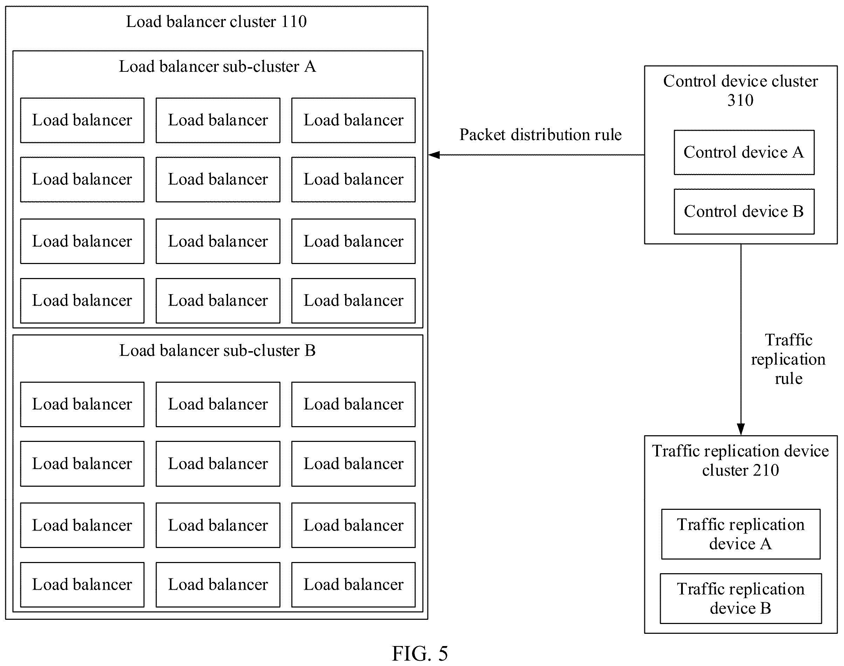

As shown in FIG. 5, the control device in a control device cluster 310 is configured to send a packet distribution rule to the load balancer in the load balancer cluster 110. The packet distribution rule indicates the load balancer to determine a service server and a cloud service application that correspond to a service packet. The control device in the control device cluster 310 is further configured to send a traffic replication rule to the traffic replication device in the traffic replication device cluster 210. The traffic replication rule indicates the traffic replication device to determine a test server and a test application that correspond to a mirrored service packet. The mirrored service packet is obtained by the traffic replication node by replicating a received service packet.

In an optional embodiment, the load balancer cluster 110 may include a plurality of sub-clusters. As shown in FIG. 4, the load balancer cluster 110 may include two sub-clusters: a load balancer sub-cluster A and a load balancer sub-cluster B. The load balancer sub-cluster A and the load balancer sub-cluster B may be active-active (active-active) disaster recovery clusters, and both may provide a service traffic proxy and a routing service for a cloud service application. It may also be understood that, the load balancer sub-cluster A and the load balancer sub-cluster B are two disaster recovery clusters with a same function. The load balancer sub-cluster A and the load balancer sub-cluster B may perform health status monitoring and function switching between each other. When one load balancer sub-cluster stops operating unexpectedly, it is possible to switch to another load balancer sub-cluster, so that the load balancer cluster can continue to function normally. The service server cluster 410 may also include a plurality of service servers, for example, a service server A and a service server B. Both the service server A and the service server B are configured to run the cloud service application, and each service server may run a plurality of cloud service applications. The test server cluster 510 may also include a plurality of test servers, for example, a test server A and a test server B. Both the test server A and the test server B are configured to run a test application, and each test server may run a plurality of test applications.

The control device cluster 310 may include two control devices: a control device A and a control device B. The control device A may send a packet distribution rule for the service server A to a load balancer in the load balancer sub-cluster A. The control device B may send a packet distribution rule for the service server B to a load balancer in the load balancer sub-cluster B.

The traffic replication device cluster 210 may include two traffic replication devices: a traffic replication device A and a traffic replication device B. The traffic replication device A may receive a service packet sent by the load balancer in the load balancer sub-cluster A, and the traffic replication node B may receive a service packet sent by the load balancer in the load balancer sub-cluster B. The control device A may further send a traffic replication rule for the test server A to the traffic replication device A. The control device B may further send a traffic replication rule for the test server B to the traffic replication device B.

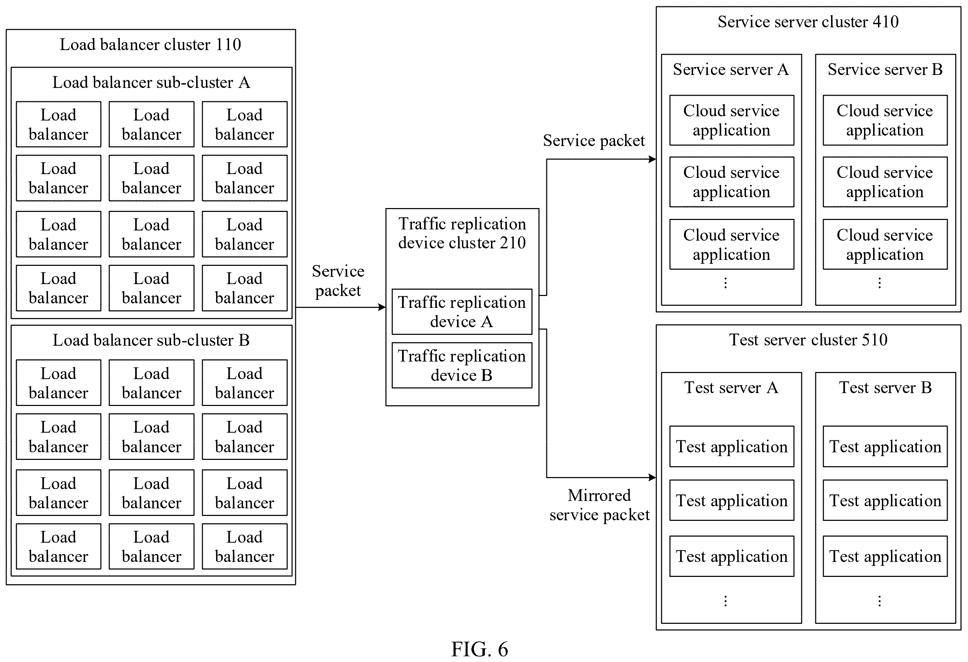

For example, a load balancer sub-cluster A and a load balancer sub-cluster B may each include 12 load balancers. As shown in FIG. 6, when receiving a service packet, 12 load balancers in the load balancer sub-cluster A may determine, in the service server cluster according to the packet distribution rule sent by the control device A, a computing node and a destination cloud service application that correspond to the service packet, add an IP address of the computing node and port information of the destination cloud service application to the service packet, and send the service packet to the traffic replication device A. The traffic replication device A may transmit, based on the IP address of the computing node and the port information of the destination cloud service application that are carried in the service packet, the service packet to a destination cloud service application running in the service server A, replicate the received service packet to obtain a mirrored service packet, determine, in the test server cluster according to the traffic replication rule sent by the control device A, an IP address of a computing node corresponding to the mirrored service packet and port information of a destination test application, and transmit the mirrored service packet to the destination test application running in the test server A. When receiving a service packet, 12 load balancers in the load balancer sub-cluster B may determine, in the service server cluster according to the packet distribution rule sent by the control device B, a computing node and a destination cloud service application that correspond to the service packet, add an IP address of the computing node and port information of the destination cloud service application to the service packet, and send the service packet to the traffic replication device B. The traffic replication device B may transmit, based on the IP address of the computing node and the port information of the destination cloud service application that are carried in the service packet, the service packet to a destination cloud service application running in the service server B, replicate the received service packet to obtain a mirrored service packet, determine, in the test server cluster according to the traffic replication rule sent by the control device B, an IP address of a computing node corresponding to the mirrored service packet and port information of a destination test application, and transmit the mirrored service packet to the destination test application running in the test server B.

In this embodiment of this application, device costs of the cloud service system can be reduced. For example, a network adapter egress bandwidth is used as an example. A network adapter egress bandwidth of one load balancer is 4 Gbps. If a traffic mirroring process is deployed on the load balancer, half of a bandwidth of 4 Gbps that can be originally used to transmit to-be-distributed service traffic needs to be allocated to transmit mirrored service traffic obtained through traffic mirroring. In this case, a bandwidth used to transmit the to-be-distributed service traffic is only 2 Gbps. To ensure an original service traffic processing capability of the cloud service system, a quantity of load balancers shall be doubled. It is assumed that there are originally 100 load balancers. If the traffic mirroring process is deployed on the load balancer, 100 additional load balancers need to be added. A network adapter egress bandwidth of one traffic replication device is 600 Gbps. The traffic replication device performs traffic mirroring, and one traffic replication node can serve the 100 load balancers. Costs of the one traffic replication device are far less than costs of the 100 load balancers. Therefore, the device costs of the cloud service system can be reduced in this embodiment of this application.

The cloud service system provided in this embodiment of this application includes the load balancer cluster and the traffic replication device cluster. Because performance of the traffic replication device is far higher than that of the load balancer, a plurality of load balancers in a large load balancer cluster may be connected to one traffic replication device. The load balancer cluster provides a service traffic distribution capability, and determines a destination application corresponding to service traffic. The traffic replication device cluster provides a traffic mirroring capability, and the traffic mirroring, the cloud service application, and the load balancer that run on different physical nodes respectively.

This embodiment of this application implements decoupling of the traffic mirroring from the load balancer and the cloud service application, and can reduce deployment costs of the traffic mirroring and improve overall performance of the cloud service system in comparison with a solution of deploying the traffic mirroring process in the load balancer or the cloud service application. When an additional load balancer is needed, the traffic mirroring process does not need to be deployed on the new load balancer. This can implement service expansion by adding no or a few traffic replication nodes, thereby improving scalability of the cloud service system.

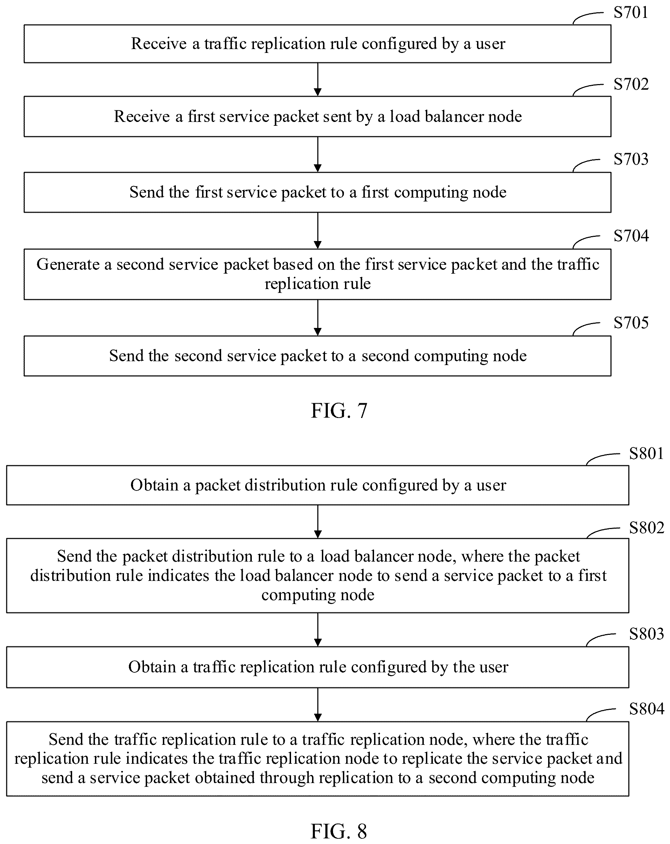

In the foregoing embodiment, the traffic replication method performed by the traffic replication device may include the following steps, as shown in FIG. 7.

S701: Receive a traffic replication rule configured by a user.

The traffic replication rule includes an IP address of a first computing node and an IP address of a second computing node.

S702: Receive a first service packet sent by a load balancer node.

A destination IP address of the first service packet is the IP address of the first computing node.

S703: Send the first service packet to the first computing node.

S704: Generate a second service packet based on the first service packet and the traffic replication rule.

A destination IP address of the second service packet is the IP address of the second computing node.

S705: Send the second service packet to the second computing node.

In this embodiment of this application, a traffic replication node generates the second service packet based on the first service packet sent by the load balancer node and the traffic replication rule, to implement traffic replication. In a load balancing environment, the traffic replication node provides a dedicated computing resource for traffic replication, thereby implementing efficient traffic replication.

In the foregoing embodiment, the traffic replication method performed by the management platform may include the following steps, as shown in FIG. 8.

S801: Obtain a packet distribution rule configured by a user.

The packet distribution rule includes an IP address of a first computing node.

S802: Send the packet distribution rule to a load balancer node.

The packet distribution rule indicates the load balancer node to send a service packet to the first computing node. The service packet is sent to the first computing node through a traffic replication node.

S803: Obtain a traffic replication rule configured by the user.

The traffic replication rule includes the IP address of the first computing node and an IP address of a second computing node.

S804: Send the traffic replication rule to the traffic replication node.

The traffic replication rule indicates the traffic replication node to replicate the service packet and send a service packet obtained through replication to the second computing node.

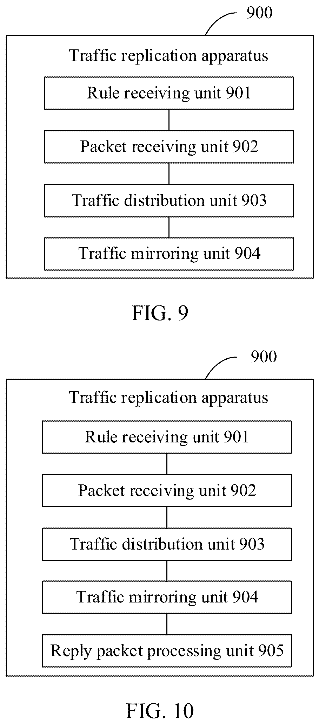

Based on a same inventive concept as the foregoing method embodiments, an embodiment of this application further provides a load balancing-based traffic replication apparatus. The apparatus may be used in a traffic replication node in a cloud service system. In some embodiments, as shown in FIG. 9, the traffic replication apparatus 900 may include a rule receiving unit 901, a packet receiving unit 902, a traffic distribution unit 903, and a traffic mirroring unit 904. The traffic replication apparatus 900 may be configured to implement functions of the foregoing method embodiments, and therefore can implement beneficial effects of the foregoing method embodiments.

The rule receiving unit 901 may be configured to receive a traffic replication rule configured by a user. The traffic replication rule includes an IP address of a first computing node and an IP address of a second computing node. The packet receiving unit 902 may be configured to receive a first service packet sent by a load balancer node, where a destination IP address of the first service packet is the IP address of the first computing node. The traffic distribution unit 903 may be configured to send the first service packet to the first computing node. The traffic mirroring unit 904 may generate a second service packet based on the first service packet and the traffic replication rule, and send the second service packet to the second computing node, where a destination IP address of the second service packet is the IP address of the second computing node.

In some embodiments, as shown in FIG. 10, the traffic replication apparatus 900 may further include a reply packet processing unit 905. The reply packet processing unit 905 may be configured to: if receiving a first reply packet that is for the first service packet and that is sent by the first computing node, send the first reply packet to the load balancer node; or if receiving a second reply packet that is for the second service packet and that is sent by the second computing node, discard the second reply packet.

For example, the rule receiving unit 901, the packet receiving unit 902, the traffic distribution unit 903, the traffic mirroring unit 904, and the reply packet processing unit 905 may be integrated in the traffic replication node 200 shown in FIG. 1. The rule receiving unit 901, the packet receiving unit 902, the traffic distribution unit 903, the traffic mirroring unit 904, and the reply packet processing unit 905 may all be implemented through software or hardware. For example, the following uses the rule receiving unit 901 as an example to describe an implementation of the rule receiving unit. Similarly, for implementations of the packet receiving unit 902, the traffic distribution unit 903, the traffic mirroring unit 904, and the reply packet processing unit 905, refer to the implementation of the rule receiving unit 901.

A module is used as an example of a software functional module, and the rule receiving unit 901 may include code running on a computing instance. The computing instance may include at least one of a physical host (node device), a virtual machine, and a container. Further, there may be one or more computing instances. For example, the rule receiving unit 901 may include code running on a plurality of hosts/virtual machines/containers.

A module is used as an example of a hardware functional module. The rule receiving unit 901 may be a device implemented by using an application-specific integrated circuit (application-specific integrated circuit, ASIC), a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

Functional modules in this embodiment of this application may be integrated into one processor, or each of the modules may exist alone physically, or two or more modules are integrated into one module. The integrated module may be implemented in a form of hardware, or may be implemented in a form of a software functional module.

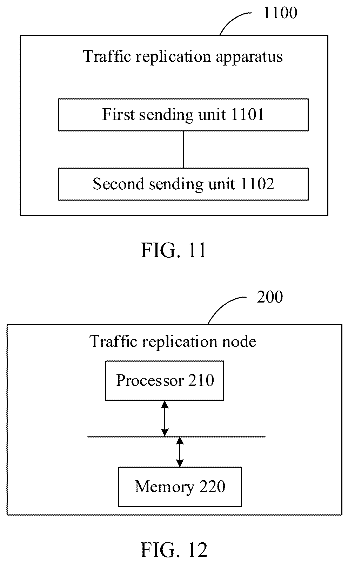

Based on a same inventive concept as the foregoing method embodiments, an embodiment of this application further provides a load balancing-based traffic replication apparatus. The apparatus may be used in a management platform in a cloud service system. In some embodiments, as shown in FIG. 11, the traffic replication apparatus 1100 may include a first sending unit 1101 and a second sending unit 1102.

The first sending unit 1101 may be configured to: obtain a packet distribution rule configured by a user, where the packet distribution rule includes an IP address of a first computing node; and send the packet distribution rule to a load balancer node. The packet distribution rule indicates the load balancer node to send a service packet to the first computing node, and the service packet is sent to the first computing node through a traffic replication node. The packet receiving unit 902 may be configured to: obtain a traffic replication rule configured by the user, where the traffic replication rule includes the IP address of the first computing node and an IP address of a second computing node; and send the traffic replication rule to the traffic replication node. The traffic replication rule indicates the traffic replication node to replicate the service packet and send a service packet obtained through replication to the second computing node.

For example, the first sending unit 1101 and the second sending unit 1102 may be integrated into the management platform 300 shown in FIG. 1. Both the first sending unit 1101 and the second sending unit 1102 may be implemented by software, or may be implemented by hardware. For example, the following uses the first sending unit 1101 as an example to describe an implementation of a rule receiving unit. Similarly, for implementations of the first sending unit 1101 and the second sending unit 1102, refer to the implementation of the first sending unit 1101.

A module is used as an example of a software functional module, and the first sending unit 1101 may include code running on a computing instance. The computing instance may include at least one of a physical host (node device), a virtual machine, and a container. Further, there may be one or more computing instances. For example, the first sending unit 1101 may include code running on a plurality of hosts/virtual machines/containers.

A module is used as an example of a hardware functional module, and the first sending unit 1101 may be a device implemented by using an ASIC or a PLD, or the like. The PLD may be implemented by a CPLD, an FPGA, a GAL, or any combination thereof.

Functional modules in this embodiment of this application may be integrated into one processor, or each of the modules may exist alone physically, or two or more modules are integrated into one module. The integrated module may be implemented in a form of hardware, or may be implemented in a form of a software functional module.

Based on a same inventive concept as the foregoing method embodiment, an embodiment of this application further provides a traffic replication node. The traffic replication node may be configured to implement a function of the method embodiment shown in FIG. 7, and therefore can implement beneficial effects of the foregoing method embodiment.

In some embodiments, a structure of the traffic replication node 200 may be shown in FIG. 12, including a processor 210 and a memory 220 connected to the processor 210. The processor 210 and the memory 220 may be connected to each other by using a bus. The processor 210 may be used as a host processor of the traffic replication node 200, that is, a control core of the traffic replication node 200. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like. A specific medium of connection between the processor 210 and the memory 220 is not limited in embodiments of this application.

The memory 220 may be a volatile memory, for example, a random access memory. Alternatively, the memory may be a non-volatile memory, for example, a read-only memory, a flash memory, a hard disk drive (hard disk drive, HDD), or a solid-state drive (solid-state drive, SSD). Alternatively, the memory 220 is any other medium that can carry or store expected program code in a form of an instruction or a data structure and that can be accessed by a computer, which is not limited thereto. The memory 220 may be a combination of the foregoing memories. The memory 220 may be configured to store a software program and a module.

The processor 210 may include one or more processors. The processor 210 runs a software program and a module that are stored in the memory 220, to perform various functional applications of the traffic replication node 200 and data processing, for example, a traffic distribution method provided in this embodiment of this application.

In some embodiments, the traffic replication node 200 may further include a communication module, and the communication module is connected to the processor 210 and the memory 220 by using a bus. The communication module may be configured to communicate with a load balancer, a management platform, a service server, and a test server.

For example, when the traffic replication node 200 is configured to implement the functions of the foregoing method embodiments, the processor 210 may be configured to receive a traffic replication rule configured by a user. The traffic replication rule includes an IP address of a first computing node and an IP address of a second computing node. The traffic replication node may receive a first service packet sent by a load balancer node, where a destination IP address of the first service packet is the IP address of the first computing node. The traffic replication node sends the first service packet to the first computing node, and generates a second service packet based on the first service packet and the traffic replication rule. A destination IP address of the second service packet is the IP address of the second computing node. The traffic replication node sends the second service packet to the second computing node.

It may be understood that the structure illustrated in this embodiment of this application does not constitute a specific limitation on the node device. In some other embodiments of this application, the node device may include more or fewer components than those shown in the figure, or combine some components, or split some components, or have different component arrangements. The components shown in the figure may be implemented by hardware, software, or a combination of software and hardware.

The method steps in embodiments of this application may be implemented by hardware, or may be implemented by the processor by executing a computer program or instructions. The computer program or the instructions may constitute a computer program product.

An embodiment of this application further provides a computer program product, including computer-executable instructions. In an embodiment, the computer-executable instructions are used to enable a computer to perform functions of the traffic replication node in the foregoing method embodiments.

The computer-executable instructions may be stored in a computer-readable storage medium. An embodiment of this application further provides a computer-readable storage medium, and the computer-readable storage medium stores executable instructions. In an embodiment, the computer-executable instructions are used to enable a computer to perform functions of the traffic replication node in the foregoing method embodiments.

The computer-readable storage medium provided in this embodiment of this application may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk, a CD-ROM, or any other form of computer-readable storage medium well-known in the art.

The computer-executable instructions may be stored in the computer-readable storage medium, or may be transmitted from a computer-readable storage medium to another computer-readable storage medium. For example, a computer program or instructions may be transmitted from a website, computer, server, or data center to another website, computer, server, or data center in a wired or wireless manner. The computer-readable storage medium may be any usable medium that can be accessed by the computer, or a computing device, for example, a server or a data center, integrating one or more usable media. The usable medium may be a magnetic medium, for example, a floppy disk, a hard disk drive, or a magnetic tape, or may be an optical medium, for example, a digital video disc (digital video disc, DVD), or may be a semiconductor medium, for example, a solid state drive.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. In addition, the terms "include", "have", and any variant thereof are intended to cover non-exclusive inclusion, for example, include a series of steps or modules. Methods, systems, products, or devices are not necessarily limited to those steps or modules that are expressly listed, but may include other steps or modules that are not expressly listed or that are inherent to such processes, methods, products, or devices.

Although this application is described with reference to specific features and embodiments thereof, it is clear that various modifications and combinations may be made to them without departing from the spirit and scope of this application. Correspondingly, this specification and the accompanying drawings are merely example descriptions of solutions defined by the appended claims, and are considered as any or all of modifications, variations, combinations, or equivalents that cover the scope of this application.

It is clear that a person skilled in the art can make various modifications and variations to this application without departing from the scope of this application. In this case, this application is intended to cover these modifications and variations of embodiments of this application provided that they fall within the scope of the claims and their equivalent technologies.

## Claims

1. A load balancing-based traffic replication method, wherein the method is applied to a traffic replication node, the traffic replication node is disposed in an infrastructure, and a first computing node, a second computing node, and a load balancer node are further disposed in the infrastructure; and the method comprises:
receiving a traffic replication rule configured by a user, wherein the traffic replication rule comprises an IP address of the first computing node and an IP address of the second computing node;
receiving a first service packet sent by the load balancer node, wherein a destination IP address of the first service packet is the IP address of the first computing node;
sending the first service packet to the first computing node;
generating a second service packet based on the first service packet and the traffic replication rule, wherein a destination IP address of the second service packet is the IP address of the second computing node; and
sending the second service packet to the second computing node.

2. The method according to claim 1, wherein the traffic replication rule comprises a correspondence between the IP address of the first computing node and the IP address of the second computing node; and generating the second service packet based on the first service packet and the traffic replication rule comprises:
replicating the first service packet to obtain a mirrored packet of the first service packet; and
changing the IP address of the first computing node in the mirrored packet to the IP address of the second computing node based on the correspondence between the IP address of the first computing node and the IP address of the second computing node, to obtain the second service packet.

3. The method according to claim 1 or 2, wherein destination port information of the first service packet is port information of a first application; and sending the first service packet to the first computing node comprises:
sending the first service packet to the first application on the first computing node based on the IP address of the first computing node and the port information of the first application.

4. The method according to claim 3, wherein the traffic replication rule further comprises a correspondence between the port information of the first application and port information of a second application, and the second application is an application on the second computing node; and sending the second service packet to the second computing node comprises:
determining, based on the correspondence between the port information of the first application and the port information of the second application, that destination port information of the second service packet is the port information of the second application; and
sending the second service packet to the second application on the second computing node based on the IP address of the second computing node and the port information of the second application.

5. The method according to any one of claims 1 to 4, wherein after sending the second service packet to the second computing node, the method further comprises:
if receiving a first reply packet that is for the first service packet and that is sent by the first computing node, sending the first reply packet to the load balancer node; or
if receiving a second reply packet that is for the second service packet and that is sent by the second computing node, discarding the second reply packet.

6. The method according to claim 5, wherein the method further comprises:
when receiving a reply packet, determining, based on an IP address carried in the reply packet and the traffic replication rule, that the reply packet is the first reply packet sent by the first computing node, or that the reply packet is the second reply packet sent by the second computing node.

7. A load balancing-based traffic replication apparatus, wherein the apparatus is used in a traffic replication node, the traffic replication node is disposed in an infrastructure, and a first computing node, a second computing node, and a load balancer node are further disposed in the infrastructure; and the apparatus comprises:
a rule receiving unit, configured to receive a traffic replication rule configured by a user, wherein the traffic replication rule comprises an IP address of the first computing node and an IP address of the second computing node;
a packet receiving unit, configured to receive a first service packet sent by the load balancer node, wherein a destination IP address of the first service packet is the IP address of the first computing node;
a traffic distribution unit, configured to send the first service packet to the first computing node; and
a traffic mirroring unit, configured to: generate a second service packet based on the first service packet and the traffic replication rule, and send the second service packet to the second computing node, wherein a destination IP address of the second service packet is the IP address of the second computing node.

8. The apparatus according to claim 7, wherein the traffic replication rule comprises a correspondence between the IP address of the first computing node and the IP address of the second computing node, and the traffic mirroring unit is specifically configured to:
replicate the first service packet to obtain a mirrored packet of the first service packet; and
change the IP address of the first computing node in the mirrored packet to the IP address of the second computing node based on the correspondence between the IP address of the first computing node and the IP address of the second computing node, to obtain the second service packet.

9. The apparatus according to claim 7 or 8, wherein destination port information of the first service packet is port information of a first application, and the traffic distribution unit is specifically configured to:
send the first service packet to the first application on the first computing node based on the IP address of the first computing node and the port information of the first application.

10. The apparatus according to claim 9, wherein the traffic replication rule further comprises a correspondence between the port information of the first application and port information of a second application, the second application is an application on the second computing node, and the traffic mirroring unit is specifically configured to:
determine, based on the correspondence between the port information of the first application and the port information of the second application, that destination port information of the second service packet is the port information of the second application; and
send the second service packet to the second application on the second computing node based on the IP address of the second computing node and the port information of the second application.

11. The apparatus according to any one of claims 7 to 10, wherein the apparatus further comprises a reply packet processing unit, and the reply packet processing unit is configured to:
if receiving a first reply packet that is for the first service packet and that is sent by the first computing node, send the first reply packet to the load balancer node; or
if receiving a second reply packet that is for the second service packet and that is sent by the second computing node, discard the second reply packet.

12. The apparatus according to claim 11, wherein the reply packet processing unit is further configured to:
when receiving a reply packet, determine, based on an IP address carried in the reply packet and the traffic replication rule, that the reply packet is the first reply packet sent by the first computing node, or that the reply packet is the second reply packet sent by the second computing node.

13. A traffic replication node, comprising a memory and a processor, wherein the memory stores a computer program, and the processor is configured to execute the computer program stored in the memory, to implement the method according to any one of claims 1 to 6.

14. A cloud service system, wherein the cloud service system comprises a traffic replication node, a first computing node, a second computing node, and a load balancer node;
the load balancer node is configured to receive a packet distribution rule configured by a user, and the packet distribution rule comprises an IP address of the first computing node;
the traffic replication node is configured to receive a traffic replication rule configured by the user, and the traffic replication rule comprises the IP address of the first computing node and an IP address of the second computing node;
the load balancer node is further configured to: determine, according to the packet distribution rule, that a destination IP address of the first service packet is the IP address of the first computing node, and send the first service packet to the traffic replication node; and
the traffic replication node is further configured to: receive the first service packet, send the first service packet to the first computing node, generate a second service packet based on the first service packet and the traffic replication rule, and send the second service packet to the second computing node, wherein a destination IP address of the second service packet is the IP address of the second computing node.

15. A computer-readable storage medium, storing computer-executable instructions, wherein the computer-executable instructions are used to enable a computer to perform the method according to any one of claims 1 to 6.

16. A computer program product, comprising computer-executable instructions, wherein the computer-executable instructions are used to enable a computer to perform the method according to any one of claims 1 to 6.
